# EUROPÄISCHE PATENTSCHRIFT

(11) **EP 1 194 928 B1**
(45) Veröffentlichungstag und Bekanntmachung des Hinweises auf die Patenterteilung: **13.11.2002**
(21) Anmeldenummer: 00940371.8
(22) Anmeldetag: 14.06.2000
(51) Int. Cl.: G11B 7/26, B32B 31/20, B29C 65/50

(54) **VORRICHTUNG UND VERFAHREN ZUM HERSTELLEN EINES DATENTRÄGERS**
DEVICE AND METHOD FOR PRODUCING A DATA CARRIER
DISPOSITIF ET PROCEDE DE FABRICATION D'UN SUPPORT DE DONNEES

(30) Priorität: 16.06.1999 DE 19927516
(43) Veröffentlichungstag der Anmeldung: 10.04.2002
(73) Patentinhaber: Steag HamaTech AG, 75447 Sternenfels (DE); 3M Innovative Properties Company, St. Paul, Minnesota 55133-3427 (US)
(72) Erfinder: LIEDTKE, Björn, D-75038 Oberderdingen (DE); GORDT, Joachim, D-75447 Sternenfels (DE); SPEER, Ulrich, D-75239 Eisingen (DE); WISE, James, D-75447 Sternenfels (DE); ESSER, Hans-Gerd, D-75015 Bretten (DE); SCHULL, Wilfried, 50825 Köln (DE)
(74) Vertreter: Wagner, Karl H., Dipl.-Ing.
(86) Internationale Anmeldenummer: EP0005442
(87) Internationale Veröffentlichungsnummer: WO00077784

(56) Entgegenhaltungen:
- EP-A- 0 463 382
- EP-A- 0 854 477
- US-A- 5 279 689
- US-A- 5 673 251
- PATENT ABSTRACTS OF JAPAN vol. 016, no. 010 (M-1199), 13. Januar 1992 (1992-01-13) & JP 03 232659 A (JAPAN STEEL WORKS LTD:THE), 16. Oktober 1991 (1991-10-16)
- PATENT ABSTRACTS OF JAPAN vol. 010, no. 212 (P-480), 24. Juli 1986 (1986-07-24) & JP 61 050232 A (MATSUSHITA ELECTRIC IND CO LTD), 12. März 1986 (1986-03-12)

## Beschreibung

Die vorliegende Erfindung bezieht sich auf eine Vorrichtung und ein Verfahren zum Herstellen eines Datenträgers mit wenigstens zwei mit einer zweiseitigen Klebefolie verklebten Substraten.

Derartige Datenträger sind beispielsweise optische Aufzeichnungsmedien, wie DVD's, usw., welche aus wenigstens zwei miteinander verklebten Substraten bestehen. Bei einer bekannten Vorrichtung zur Herstellung derartiger Datenträger, wie sie beispielsweise aus der auf dieselbe Anmetderin zurückgehenden, Anmeldung DE-A-197 18 471 bekannt ist, wurden die zwei Substrate mittels eines Klebers miteinander verklebt. Typischerweise wird der Kleber mittig auf eines der Substrate aufgebracht, das dann geschleudert wird, um einen möglichst gleichmäßigen Kleberfilm auf dem Substrat zu erreichen. Dabei werden Kleberreste von dem Substrat weggeschleudert, die anschließend aufwendig entsorgt werden müssen. Nach dem Aufbringen der Kleberschicht werden die Substrate zusammengefügt, wobei eines der Substrate vor dem Zusammenfügen derart gebogen wird, dass es zunächst nur in einem Mittelbereich mit dem anderen Substrat in Kontakt kommt. Beim Zusammenfügen der Substrate wird die Biegung dann allmählich gelöst, so dass auch die restlichen Bereiche der Substrate miteinander in Kontakt kommen. Diese Verbiegung ist vorteilhaft, um Lufteinschlüsse zwischen den Substraten zu verhindern, welche die Gebrauchsfähigkeit des derart hergestellten Datenträgers beeinflussen könnten. Sowohl durch das Schleudern der Substrate beim Aufbringen der Kleberschicht, als auch durch das Verbiegen der Substrate beim Zusammenfügen besteht jedoch die Gefahr, dass die Substrate beschädigt werden. Darüber hinaus ist der Vorgang zum Aufbringen des Klebers sehr aufwendig, und es ist nicht immer möglich, eine über eine Vielzahl von Belakkungsvorgängen gleichmäßige Kleberschicht zu erhalten. Ferner ist die Entsorgung der während des Schleudervorgangs abgeschleuderten Kleberreste sehr aufwendig und kostenintensiv.
Aus der EP-A-0 854 477 ist ein Verfahren zum Herstellen eines Datenträgers bekannt, bei dem zwei Substrate durch Aufbringen einer zweiseitig mit Kleber beschichteten Folie auf ein erstes Substrat, Ausrichten eines zweiten Substrats bezüglich des ersten Substrats und Zusammenfügen der Substrate miteinander verklebt werden. Dabei wird die an einer Trägerfolie gehaltene beschichteten Folie über eine Transportvorrichtung über das erste Substrat bewegt, in dieser Position angehalten und dann mit einem elastischen Stempel in Kontakt mit dem Substrat bewegt und daran angedrückt. Anschließend wird der Stempel vom Substrat weg bewegt und die Trägerfolie über eine Rolle von der beschichteten Folie abgezogen.

Bei diesem Verfahren ergibt sich die Gefahr, dass Luftblasen, welche die Qualität des Datenträgers negativ beeinflussen, zwischen dem Substrat und der Klebefolie eingeschlossen werden. Darüber hinaus ist das Aufbringverfahren der Klebefolie sehr Zeitintensiv, da eine Bewegung der Folie während des Andrückens und des anschließenden Abziehens der Trägerfolie gestoppt werden muß.

Ausgehend der oben beschriebenen Vorrichtung und dem Verfahren zur Herstellung des Datenträgers liegt der vorliegenden Erfindung die Aufgabe zugrunde, eine Vorrichtung und ein Verfahren vorzusehen, welches eine einfache und kostengünstige Herstellung des Datenträgers mit hoher Qualität, insbesondere ohne Lufteinschlüsse ermöglicht. Ferner liegt der Erfindung die Aufgabe zugrunde, die für das verkleben zweier Substrate benötigten Prozeßzeiten zu verkürzen.

Die der Erfindung zugrundeliegende Aufgabe wird erfindungsgemäß bei einem Verfahren der eingangs genannten Art dadurch gelöst, dass die Klebefolie über eine sich drehende Andrückrolle auf das Substrat gedrückt wird, während das Substrat und die Andrückrolle relativ zueinander bewegt werden. Hierdurch werden Lufteinschlüsse zwischen dem Substrat und der Klebefolie vermieden, da die Folie kontrolliert entlang einer geraden Linie auf das Substrat gedrückt wird. Ferner muß die Bewegung der Folie nicht angehalten werden, wodurch sich ein fortlaufender Prozeßablauf ergibt. Neben dem Aufbringen der Folie kann in dem selben Arbeitsschritt die Trägerfolie von der Klebefolie entfernt werden, wodurch der Prozeßablauf noch weiter beschleunigt wird.

Gemäß einer besonders bevorzugten Ausführungsform der Erfindung wird die Klebefolie während oder nach dem Aufbringen auf das erste Substrat von einer Trägerfolie abgezogen, die eine nötige Stabilität aufweist, um einen Transport der Klebefolie zu ermöglichen. Die Trägerfolie verhindert ferner ein vorzeitiges Verkleben einer Seite der Klebefolie mit anderen Gegenständen sowie eine Verschmutzung derselben. Vorzugsweise wird vor dem Aufbringen der Klebefolie auf das erste Substrat eine Schutzfolie, von der der Trägerfolie gegenüberliegenden Seite der Klebefolie abgezogen, welche eine Verunreinigung der anderen Seite der Klebefolie vor dem Verkleben mit dem ersten Substrat verhindert.

Um ein gutes und gleichmäßiges Verkleben der Substrate zu gewährleisten, entspricht die Form und Größe der Klebefolie den zu verklebenden Oberflächen der Substrate. Hierdurch wird sichergestellt, dass die Substrate über ihre vollständige Oberfläche miteinander verklebt werden und keine Klebefolie über die nicht zu verklebenden Oberflächen vorsteht. Dabei sind vorzugsweise Abschnitte der Klebefolie, welche der Form und Größe der Substrate entsprechen, auf der Trägerfolie ausgestanzt. Vorzugsweise wird die Klebefolie zentriert auf der zu verklebenden Oberfläche des Substrats aufgebracht, um die obigen Vorteile zu erreichen. Hierzu werden die Klebefolie und das Substrat vor dem Aufbringen zueinander ausgerichtet.

Vorzugsweise wird der Anpreßdruck der Andrückrolle gesteuert.

Vorteilhafterweise wird die Klebefolie vor dem Andrücken durch die Andrückrolle unter einem vorgegebenen Winkel zur Oberfläche des Substrats gehalten, um sicherzustellen, dass die Klebefolie nicht vor dem Andrücken durch die Andrückrolle mit der Oberfläche des Substrats in Kontakt kommt. Dies stellt ein gleichmäßiges Andrücken der Klebefolie sicher und verhindert Lufteinschlüsse zwischen Klebefolie und Substrat. Vorzugsweise werden das Substrat und die Andrückrolle während des Aufbringens der Klebefolie relativ zueinander bewegt. Dabei wird das Substrat vorzugsweise linear an der Andrückrolle vorbeibewegt, und die Andrückrolle wird vorzugsweise synchron zur Bewegung des Substrats um ihre Längsachse gedreht, um die Klebefolie fortlaufend mit dem Substrat zu verkleben.

Bei einer bevorzugten Ausführungsform der Erfindung werden die Substrate nach dem Aufbringen der Klebefolie auf dem ersten Substrat, zu deren Ausrichtung, auf einem Zentrier- und Halteelement abgelegt. Hierdurch wird vor dem Zusammenfügen eine Ausrichtung und Zentrierung der Substrate zueinander sichergestellt. Dabei hält das Zentrier- und Halteelement die Substrate vorzugsweise vor dem Zusammenfügen beabstandet.

Vorteilhafterweise erfolgt das Zusammenfügen der Substrate im Vakuum, um Lufteinschlüsse zwischen den Substraten zu verhindern. Zum Zusammenfügen der Substrate werden diese vorzugsweise zusammengedrückt, um einen sicheren Kontakt zu gewährleisten. Vorzugsweise wird der auf die Substrate ausgeübte Druck gesteuert. Die Klebefolie spricht vorzugsweise auf Druck an und die Haftkraft wird abhängig vom angelegten Druck verändert. Bei einem anderen Ausführungsbeispiel der Erfindung wird die Klebefolie ausgehärtet.

Die der Erfindung zugrundeliegende Aufgabe wird bei einer Vorrichtung zum Herstellen eines Datenträgers mit wenigstens zwei miteinander verklebten Substraten, die eine Laminierstation zum Aufbringen einer zweiseitig klebenden Klebefolie auf einem ersten Substrat und eine Substrat-Verklebestation zum Ausrichten und Zusammenfügen der Substrate aufweist dadurch gelöst, dass die Laminierstation (7) eine drehbare Andrückrolle (33) und eine Einrichtung (47) zum Bewegen des Substrats (6) und/oder der Andrückrolle relativ zueinander aufweist.

Durch eine derartige Vorrichtung werden die schon unter Bezugnahme auf das Verfahren erwähnten Vorteile erreicht.

Vorteilhafterweise weist die Vorrichtung eine Zentrier- und Halteeinrichtung auf, die in einer ersten Einstellung die Substrate beabstandet hält und in einer zweiten Einstellung ein zentriertes Zusammenfügen der Substrate ermöglicht. Die Substrat-Verklebestation weist vorzugsweise eine Vakuumkammer auf, um Lufteinschlüsse zwischen den Substraten zu verhindern. Die Vakuumkammer weist vorteilhafterweise eine Haube und einen Boden auf, der bei einer Ausführungsform durch ein Substratauflageelement gebildet wird, das Teil der Zentrier- und Halteeinrichtung ist. Durch die Verwendung der Zentrierund Halteeinrichtung als Teil der Vakuumkammer kann die Größe der Vakuumkammer und somit die mit dem Entlüften der Vakuumkammer assoziierten Kosten auf ein Minimum reduziert werden. Vorzugsweise weist die Substrat-Verklebestation einen Druckstempel auf, um die Substrate sicher zusammenzufügen. Der Druckstempel ist vorzugsweise planparallel zu einer Auflagefläche der Substrate, um ein gleichmäßiges Zusammendrücken der Substrate zu gewährleisten. Bei einer alternativen Ausführungsform ist eine Vorrichtung zum Anlegen von Druckluft an eines der Substrate vorgesehen, was ein besonders gleichmäßiges Zusammendrücken der Substrate ermöglicht.

Gemäß einer bevorzugten Ausführungsform der Erfindung weist der Druckstempel ein Element zur Betätigung der Zentrier- und Halteeinrichtung zwischen den ersten und zweiten Positionen auf, für eine kontrollierte Freigabe der Haltefunktion in der Einrichtung zum Zusammenfügen der Substrate.

Vorteilhafterweise ist die Klebefolie eine Schicht eines Klebers, wodurch eine Folie die beidseitig mit Kleber beschichtet ist, entfällt. Die Verwendung einer reinen Kleberschicht verbessert die optischen Eigenschaften im Verbindungsbereich der Substrate.

Die Erfindung wird nachstehend anhand bevorzugter Ausführungsbeispiele unter Bezugnahme auf die Figuren näher erläutert. Es zeigen:
- Fig. 1: eine schematische Darstellung einer Vorrichtung zum Herstellen von Datenträgern gemäß der Erfindung;
- Fig. 2: eine schematische Ansicht von Teilen einer Laminierstation gemäß der vorliegenden Erfindung;
- Fig. 3: eine Seitenansicht einer alternativen Ausführungsform einer Laminierstation gemäß der Erfindung;
- Fig. 4a-4c: eine Substrat-Verklebestation zum Ausrichten und Zusammenfügen von Substraten gemäß der Erfindung während verschiedener Verfahrensschritte;

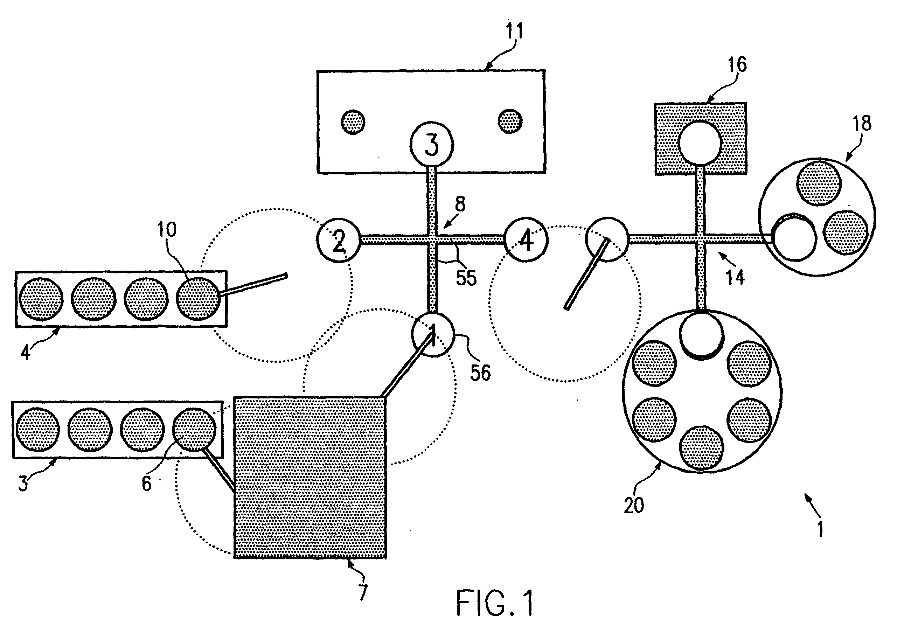

Figur 1 zeigt eine Vorrichtung 1 zur Herstellung einer DVD mit zwei verklebten Substrathälften.

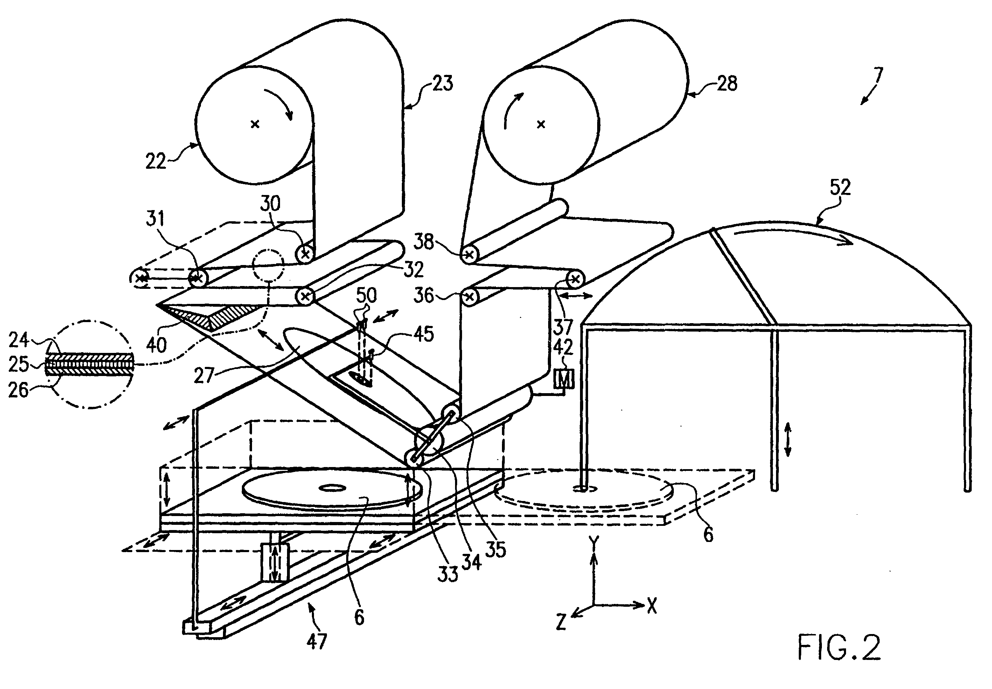

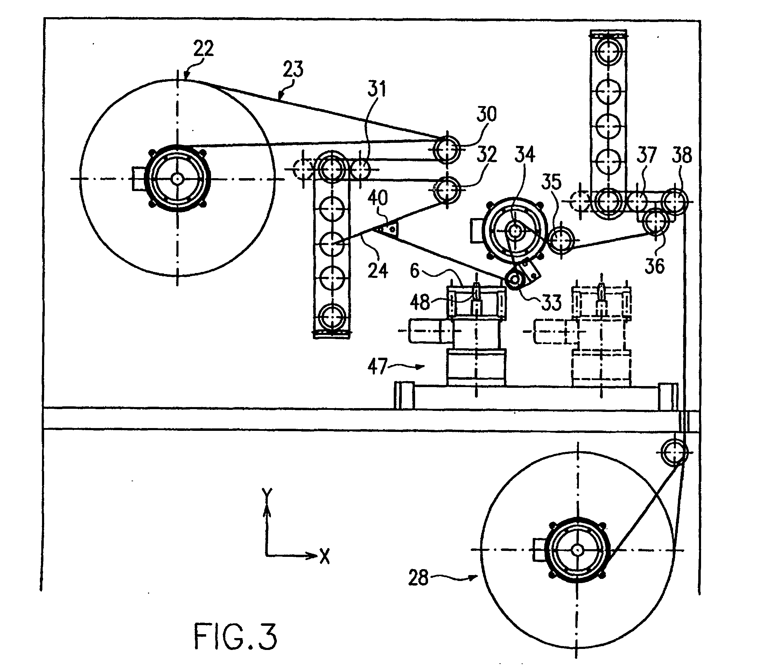

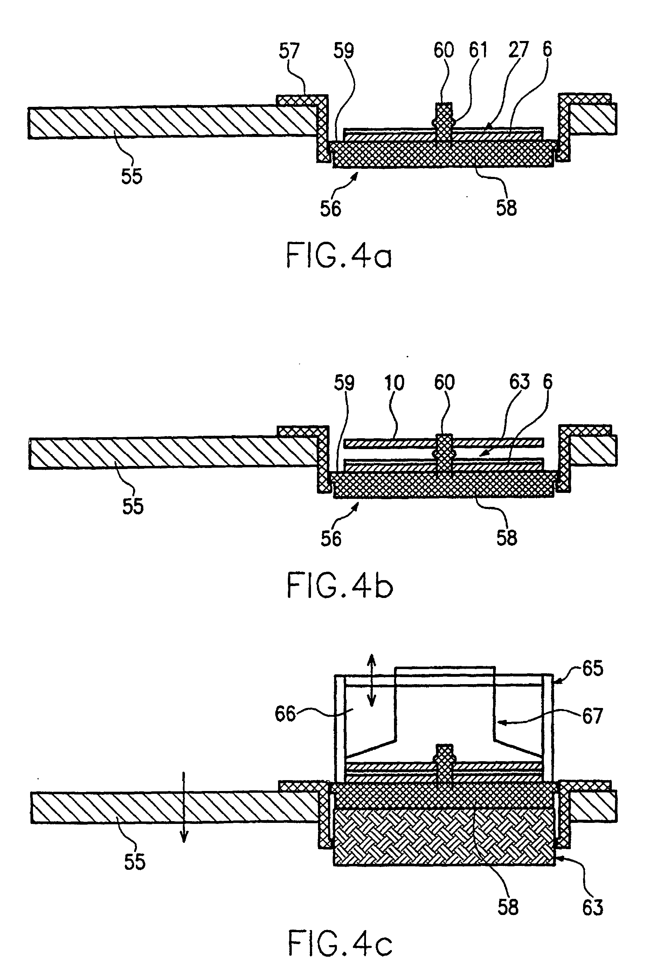

Die Vorrichtung weist erste und zweite Zuführeinheiten 3, 4 für die Zuführung zweier Substrathälften auf, die nach ihrem Verkleben eine DVD bilden. Aus der ersten Zuführstation 3 wird eine erste Substrathälfte 6 zu einer Laminierstation 7 befördert, welche in größerer Einzelheit unter Bezugnahme auf die Figuren 2 und 3 beschrieben wird. In der Laminierstation wird ein druckempfindliches Klebeband bzw. eine -folie auf die zu verklebende Oberfläche der Substrathälfte 6 aufgebracht. Dabei ist unter dem Begriff Klebeband bzw. -folie eine Schicht aus Kleber ohne ein Trägermaterial zu verstehen. Die optischen Eigenschaften einer Kleberschicht lassen sich genauer und besser kontrollieren als die eines beidseitig beschichteten Trägermaterials, wie es z.B. aus der zuvor genannten EP-A-0 854 477 bekannt ist. Anschließend wird die erste Substrathälfte 6 zu einem Rundtisch 8 transportiert und auf einer Zentrier- und Halteeinrichtung, welche in größerer Einzelheit unter Bezugnahme auf die Figuren 4a-c beschrieben wird, abgelegt. Anschließend wird der Rundtisch in eine Position gedreht, in der eine zweite Substrathälfte 10 ebenfalls auf der Zentrier- und Halteeinrichtung abgelegt wird, wobei die beiden Substrate zentriert übereinander mit einem dazwischen befindlichen Spalt gehalten werden, wie unter Bezugnahme auf die Figuren 4a-c noch beschrieben wird.

Anschließend wird der Rundtisch weiter gedreht, bis die übereinander angeordneten Substrathälften in einer Prozeßstation 11 zum Zusammenfügen der Substrathälften angeordnet sind. Die Prozeßstation 11 wird anschließend unter Bezugnahme auf die Figuren 4a-c näher beschrieben.

Nach dem Zusammenfügen der Substrathälften werden diese zu einer Entladeposition gedreht und auf einen weiteren Rundtisch geladen. Über den Rundtisch werden die zusammengefügten Substrate zu einer Scanneinheit 16 transportiert, in der die zusammengefügten Substrate gescannt werden, um festzustellen, ob sie beschädigt sind. Im Falle einer Beschädigung werden sie auf einer Station 18 abgelegt und anschließend entsorgt. Ansonsten werden sie auf einem Tisch 20 abgelegt und für ihre weitere Behandlung gesammelt.

Die Vorrichtung 1 ist in einem Reinraum angeordnet, in dem die jeweiligen Arbeitsschritte unter Reinstraumbedingungen durchgeführt werden können.

Die Figuren 2 und 3 zeigen schematische Darstellungen einer Laminierstation 7 gemäß der vorliegenden Erfindung, wobei die in Figur 2 und 3 gezeigten Laminierstationen 7 zum Teil unterschiedliche Anordnungen der jeweiligen Bauteile aufweisen. in der folgenden Beschreibung der Laminierstationen gemäß den Figuren 2 und 3 werden jedoch dieselben Bezugszeichen verwendet, soweit identische bzw. gleichartige Bauteile betroffen sind.

Die Laminierstation 7 weist eine Zuführrolle 22 auf, auf die eine bandförmige Laminierfolie 23 aufgerollt ist. Die Laminierfolie 23 besteht aus insgesamt drei Folien, nämlich einer Schutzfolie 24, einer zweiseitig klebenden Klebefolie (Kleberschicht) 25 und einer Trägerfolie 26, wie am besten in dem vergrößerten Kreisausschnitt in Figur 2 zu erkennen ist. Die Klebefolie 25 weist Abschnitte 27 auf, die entsprechend der Größe und Form einer zu verklebenden Oberseite der Substrathälfte 6 ausgestanzt sind. Die Kleberschicht ist eine auf Druck ansprechende Klebefolie, die üblicherweise als PSA-Tape bezeichnet wird, deren Adhäsionseigenschaften über den verwendeten Anpreßdruck einstellbar ist.

Die Laminierstation weist ferner eine Aufnahmerolle 28 auf, auf die Reste der Laminierfolie 23 nach einem Laminiervorgang aufgenommen werden. Zwischen der Zuführrolle 22 und der Aufnahmerolle 28 ist die Laminierfolie 23 um eine Vielzahl von Führungsrollen 30 bis 38 geführt, um einen definierten Bewegungspfad der bandförmigen Laminierfolie 23 zwischen den Rollen 22 und 28 vorzusehen. Die jeweiligen Rollen 30 bis 38 sind um ihre jeweilige Drehachse drehbar, und die Rollen 31 und 37 sind als sogenannte Tänzerrollen ausgebildet, welche in Horizontalrichtung beweglich gelagert sind, um einen Längenausgleich der Laminierfolie 23 zwischen den Rollen 22 und 28 zu ermöglichen. Hierdurch können die Rollen 22 und 28 trotz diskontinuierlicher Laminierzyklen, wie nachfolgend beschrieben wird, mit konstanter Geschwindigkeit gedreht werden. Die nicht benötigten Teile der Klebefolie 25 können vorab, d. h. vor dem Einführen der Laminierfolie in die Laminierstation, z. B. bei der Herstellung der Laminierfolie, entfernt werden, oder sie können an der Folie verbleiben, um eine gleichmäßige Dicke der Folie 23 über die gesamte Breite und Länge derselben, zumindest vor einem Laminiervorgang, sicherzustellen.

Die Laminierfolie 23 ist ferner um ein keilförmiges Rakel 40 geführt, an dem die Laminierfolie 23 scharf umgelenkt wird, um ein Abziehen der Schutzfolie 24 von der Laminierfolie 23 zu ermöglichen, so dass eine Seite der Klebefolie 25 zum Verkleben einer Substrathälfte 6 freigelegt wird. Das Abziehen der Schutzfolie 24 ist am besten in Figur 3 zu erkennen. Die Schutzfolie 24 wird nach dem Abziehen auf eine nicht näher dargestellten Rolle aufgerollt. Anstelle des keilförmigen Rakels 40 könnte auch eine alternative Form einer Foien- Abzieheinrichtung verwendet werden.

Nachdem die Laminierfolie 23 um das Rakel 40 geführt ist, wird es unter einem Winkel bezüglich einer Horizontalen um die tiefer liegende Rolle 33 geführt, welche als Andrückrolle ausgebildet ist. Nach der Rolle 33 wird die Laminierfolie 23 um die Welle 34 geführt, welche über einen Motor 42 angetrieben wird.

Dabei bewirkt eine Drehung der angetriebenen Rolle 34 eine entsprechende Drehung der Andrückrolle 33 sowie einer nachgeordneten Rolle 35, die als reine Führungsrolle ausgebildet ist.

Die Laminierstation 7 weist einen ersten Sensor 45 auf, der mit der angetriebenen Rolle 34 assoziiert ist und in der Lage ist, Konturen der ausgestanzten Abschnitte 27 der Klebefolie 25 zu detektieren. Die Laminierfolie 23 wird über die angetriebene Rolle 34 in Längsrichtung hin und her gefahren, bis der Sensor 45 eine bestimmte Kontur des ausgestanzten Abschnitts 27, wie z. B. ein ausgestanztes Mittelloch, erkennt. Wenn der Sensor 45 das Mittelloch erkennt, wird er durch Bewegung der Folie direkt über einer Kante des Mittellochs positioniert, wodurch eine genaue Ausrichtung des Abschnitts 27 bezüglich der Rolle 34 und insbesondere der Andrückrolle 33 in Längsrichtung der Laminierfolie 23 aufweist.

Die Laminierstation 7 weist ferner eine Auflage- und Transporteinheit 47 für die zu laminierende Substrathälfte 6 auf. Die Auflage- und Transporteinheit 47 bildet eine horizontale Auflage für die Substrathälte 6 und ist über geeignete, nicht näher dargestellte Bewegungsvorrichtungen in alle Richtungen bewegbar. Über einen versenkbaren Zentrierstift 48 wird eine genaue Ausrichtung der Substrathälfte 6 auf der Auflage- und Transporteinheit 47 sichergestellt. Der Stift 48 ist während des Laminiervorgangs versenkbar, um ihn nicht zu beeinträchtigen. Dies wird dadurch erreicht, dass er durch eine Feder mit relativ geringer Federkraft nach oben in die in Figur 3 gezeigte Position gedrückt wird. Bei einem Druck von oben auf den Stift wird er entgegen der Federkraft nach unten gedrückt. Alternativ kann der Stift auch über einen Zylinder oder einen Motor bewegt werden.

Vor dem Laminieren des Substrats 6 wird die Transport- und Auflageeinheit 47 in X-Richtung, welche der Längsrichtung der Laminierfolie 23 entspricht, gegen einen Anschlag gefahren. Hierdurch wird sichergestellt, dass das Substrat 6 und der zuvor in Längsrichtung ausgerichtete Abschnitt 27 der Klebefolie 25 zueinander ausgerichtet sind. Anschließend wird die Transport- und Auflageeinheit 47 in Z-Richtung, die quer zur Längsrichtung der Laminierfolie 23 verläuft, hin und her gefahren. Über ein der Transport- und Auflageeinheit 47 zugeordnetes Sensorpaar 50 wird eine Kontur, wie beispielsweise die Kontur eines Mittellochs, des ausgestanzten Abschnitts 27 der Klebefolie 25 detektiert, was eine seitliche Ausrichtung der Substrathälfte 6 bezüglich des Abschnitts 27 ermöglicht.

Nachdem die Substrathälfte 6 in obiger Weise sowohl in X-Richtung als auch in Z-Richtung bezüglich des Abschnitts 27 der Klebefolie 25 ausgerichtet ist, wird die Transport- und Auflageeinheit 47 in Y-Richtung hochgefahren. Nun wird die Rolle 34 über den Motor 32 angetrieben, was bewirkt, dass sich die Laminierfolie 23 in X-Richtung bewegt. Gleichzeitig und synchronisiert mit der Drehung wird die Transport- und Auflageeinheit 47 in X-Richtung bewegt. Dabei kommt der Abschnitt 27 mit der zu verklebenden Oberfläche des Substrats 6 in Kontakt und wird durch die Andrückrolle 33 dagegen gepreßt, damit sie an der Substrathälfte 6 anhaftet und sich von der Trägerfolie 26 löst. Durch die synchronisierte Bewegung der Antriebsrolle 34 mit der Transport- und Auflageeinheit 47 wird ein Abschnitt 27 der Klebefolie 25 zentriert auf die Substrathälfte 6 aufgebracht, so dass der Abschnitt 27 der Folie 25 die zu verklebende Seite der Substrathälfte 6 vollständig abdeckt und nicht über den Rand vorsteht. Der Anpreßdruck der Andrückrolle wird über die Position der Transport- und Auflageeinheit 47 in Y-Richtung gesteuert, um die Adhäsionseigenschaften der Klebefolie 25 einzustellen. Alternativ kann natürlich auch die Andrückrolle 33 in Richtung der Transport- und Auflageeinheit bewegt werden. Für eine gute Einstellung bzw. einen Ausgleich des Anpreßdruckes kann ein gefedertes Aufhängungssystem vorgesehen werden. Die gefederte Aufhängung kann über eine Feder oder einen Druckluftzylinder erfolgen.

Anschließend wird die so mit dem Abschnitt 27 der Klebefolie 25 versehene Substrathälfte 6 über eine geeignete Handhabungsvorrichtung 52, wie beispielsweise einen Innenlochgreifer, von der Transport- und Auflageeinheit 47 entnommen und zu dem Rundtisch 8 gemäß Figur 1 transportiert.

Eine neue Substrathälfte 6 wird auf die Transport- und Auflageeinheit 47 geladen, und der Vorgang wird wiederholt. Wie schon oben erwähnt, drehen sich die Rollen 22 und 28 kontinuierlich während des ganzen Vorgangs, obwohl der Klebevorgang nicht kontinuierlich abläuft. Der daher erforderliche Längenausgleich der Laminierfolie 23 wird, wie schon erwähnt, über eine Horizontalbewegung der Tänzerrollen 31 und 37 erreicht.

Obwohl die Laminierfolie gemäß obiger Beschreibung drei Schichten, nämlich eine Schutzfolie 24, eine Klebefolie 25 und eine Trägerfolie 26, aufweist, sei bemerkt, dass eine Schutzfolie 24 nicht zwingend notwendig ist. Falls jedoch keine Schutzfolie 24 verwendet wird, sollten wenigstens die Rollen 30 und 32 speziell beschichtet sein, um ein Verkleben der dann freiliegenden Klebefolie 25 an diesen Rollen zu verhindern. Ferner muß die Klebefolie 25 auch keine auf Druck ansprechende Folie sein, und sie kann auch durch ein zweiseitig beschichtetes Trägermaterial statt einer reinen Kleberschicht gebildet werden

Alternativ könnten auch die Rollen, bis auf die Rolle 33, weggelassen werden, wobei in diesem Fall die Rollen 22 und 28 derart gesteuert werden müssen, dass eine Ausrichtung der Abschnitte 27 sowie eine mit der Transport- und Auflageeinheit 47 synchronisierte Bewegung der Laminierfolie 23 erreicht wird.

Anstelle der Sensoren 45 und 50 könnte auch ein einzelner Sensor, wie beispielsweise eine Kamera, für die obigen Ausrichtungsvorgänge verwendet werden.

Nach dem Entnehmen der Substrathälfte 6 aus der Laminierstation wird diese, wie schon erwähnt, auf dem Rundtisch 8 abgelegt, der vier Arme 55 mit daran aufgehängten Substrat-Aufnahmeeinheiten 56 aufweist.

Die Aufnahmeeinheiten 56 sind über Halteflansche 57 an den Armen 55 aufgehängt, wie in den Figuren 4a-c zu erkennen ist. Dabei kann die Auflageeinheit 56 von der Aufhängung abgehoben werden, wie beispielsweise in Figur 4c gezeigt ist.

Die Aufnahmeeinheit 56 weist eine Auflageplatte 58 mit einer ebenen Oberfläche 59 auf, auf der die erste Substrathälfte 6 abgelegt wird, wie in den Figuren 4a-4c gezeigt ist. Die Aufnahmeeinheit 56 weist ferner einen Zentrier- und Haltestift 60 mit bewegbaren Haltenasen 61 auf, welche in der Lage sind, die zweite Substrathälfte 10, wie in Figur 4b gezeigt ist, mit einem Spalt 63 über der ersten, laminierten Substrathälte 6 zu halten. Der Aufbau und die genaue Funktion des Haltestifts 60 ist in der auf dieselbe Anmelderin zurückgehenden und am gleichen Tag wie vorliegende Anmeldung eingereichten Patentanmeldung Nr. DE-A-199 27 514 mit dem Titel "Vorrichtung zum Zusammenfügen von Substraten" beschrieben. Um Wiederholungen zu vermeiden, wird auf diese Anmeldung Bezug genommen.

Der Rundtisch 8 bringt die jeweiligen Arme 55 mit den Aufnahmeeinheiten 56 sequentiell in unterschiedliche Positionen, die gemäß Figur 1 mit 1, 2, 3 und 4 bezeichnet sind.

In einer ersten Position wird eine laminierte Substrathälfte 6 auf der Aufnahmeeinheit 56 abgelegt. Dabei wird die Substrathälfte 6 über die Nasen 61 des Zentrier- und Haltestifts 60 hinwegbewegt, bis sie auf der ebenen Oberfläche 59 der Auflage 58 aufliegt, wie dies in Figur 4a gezeigt ist.

Anschließend wird die Aufnahmeeinheit 56 in die mit 2 bezeichnete Position bewegt. Dort wird die zweite Substrathälfte 10 ebenfalls auf der Substrat-Aufnahmeeinheit 56 abgelegt, wobei die Substrathälfte 10 durch den Stift 60 zentriert und beabstandet über der ersten Substrathälfte 6 gehalten wird, wie in Figur 4b gezeigt ist.

Anschließend wird die Aufnahmeeinheit 56 in die Position 3 in der Zusammenfügstation 11 bewegt.

In der Zusammenfügstation 11 wird die Aufnahmeeinheit 56 durch Absenken des Arms 55 des Rundtischs 8 auf einer Auflage 63 abgelegt, wie durch den Pfeil in Figur 4c angezeigt ist. Dadurch wird die Aufnahmeeinheit 56 vollständig von der Auflage 63 getragen und ist im wesentlichen von dem Arm 55 des Rundtischs 8 entkoppelt. In der Zusammenfügstation wird ferner eine Haube 65 über die Aufnahmeeinheit 56 bewegt und abdichtend mit der ebenen Oberfläche 59 in Kontakt gebracht. Hierdurch wird eine geschlossene Kammer 66 zwischen der Haube 65 und der Auflage 58 gebildet, in der die Substrathälften aufgenommen sind. Die Kammer 66 kann über eine nicht näher dargestellte Vorrichtung entlüftet werden. Ein Stempel 67 ist vertikal bewegbar in der Kammer 66 aufgenommen und erstreckt sich in abgedichteter Weise durch eine obere Wand der Haube 65. Um die Integrität der Kammer 66 zu gewährleisten, ist der sich durch die oberer Wand 65 erstreckende Teil des Stempels 67 von einem nicht näher dargestellten Balgen umgeben, dessen eines Ende abgedichtet am Stempel 67 befestigt ist und dessen anderes Ende abgedichtet an der oberen Wand der Haube 65 befestigt ist.

Der Stempel 67 ist innerhalb der Kammer 66 vertikal bewegbar, wie durch den Doppelpfeil in Figur 4c gezeigt ist. In Figur 4c ist der Stempel 67 in einer abgesenkten Position gezeigt, in der er die ersten und zweiten Substrathälften 6, 10 zusammendrückt. Beim Zusammendrücken der Substrate drückt der Stempel 67 die Substrathälfte 10 in Richtung der Substrathälfte 6, wobei die Nasen 61 in den Stift 60 hineingedrückt werden. Bei diesem Vorgang wird die Substrathälfte 10 durch den Stift 60 genau bezüglich der ersten Substrathälfte 6 zentriert geführt.

Die Nasen können durch die auf das Substrat 10 ausgeübte Kraft in den Stift 60 hineingedrückt werden. Alternativ können die Nasen auch durch einen am Stempel vorgesehen Betätigungsmechanismus in den Stift 60 zurückgezogen werden. Ein derartiger Mechanismus ist beispielsweise in der oben genannten Patentanmeldung näher beschrieben.

Der Anpreßdruck des Stempels wird über eine nicht näher dargestellte Steuervorrichtung gesteuert.

Nach dem Zusammenpressen der beiden Substrathälften 6, 10 wird die Kammer 66 belüftet und anschließend der Stempel 67 gemeinsam mit der Kammer 66 angehoben. Anschließend wird der Arm 55 des Rundtischs 8 wieder angehoben, um die Aufnahmeeinheit 56 wieder aufzunehmen, und dann wird er in die Position 4 weiterbewegt. Dort werden die beiden verklebten Substrathälften entnommen, auf einen weiteren Rundtisch 14 abgelegt und, wie unter Bezugnahme auf Figur 1 beschrieben, weiter behandelt.

Die Erfindung wurde zuvor anhand eines bevorzugten Ausführungsbeispiels der Erfindung beschrieben, ohne jedoch auf dieses spezielle Ausführungsbeispiel beschränkt zu sein. Insbesondere ist die beschriebene Vorrichtung und das beschriebene Verfahren nicht auf das Verkleben von DVD's beschränkt. Darüber hinaus besteht beispielsweise die Möglichkeit, den Stempel 67 mit einer Vorrichtung zu kombinieren oder zu ersetzen, welche die beiden Substrathälften 6, 10 mittels Druckluft zusammendrückt. Eine derartige Vorrichtung weist beispielsweise einen inneren und einen äußeren O-Ring an einer Platte auf, um eine abgedichtete Kammer zwischen der Platte und einer Rückseite der zweiten Substrathälfte 10 zu bilden. Diese Kammer kann über die Platte mit Druckluft beaufschlagt werden, um die beiden Substrathälften zusammenzupressen. Hierbei würde eine sehr gleichmäßige Flächenpressung entstehen, die bis auf die O-Ringe berührungslos ist, wodurch eine Beeinträchtigung der optischen Eigenschaften der Substrathälfte, beispielsweise durch Verkratzen der Rückseite der zweiten Substrathälfte 10 vermieden wird. Eine ähnliche Vorrichtung könnte alternativ oder zusätzlich auch in der Aufnahmeeinheit 56 ausgebildet sein. Die verwendete Klebefolie kann ein sogenanntes PSA-Tape sein, welches abhängig vom angelegten Druck seine Klebeeigenschaften verändert. Alternativ kann die Klebefolie auch aushärtbar sein. Die zweite Substrathälfte kann aus einem elastischen Material, wie einem Schutztape, das dazu dient, die mit der Klebefolie verklebte Oberfläche des Substrates zu schützen. elastischen Material, wie beispielsweise einem Schutztape ausgebildet sein, das dazu dient, die mit der Klebefolie verklebte Oberfläche des Substrates zu schützen.

## Patentansprüche

1. Verfahren zum Herstellen eines Datenträgers bei dem wenigstens zwei Substrate durch
Aufbringen einer zweiseitig klebenden Klebefolie (25) auf ein erstes Substrat (6); Ausrichten eines zweiten Substrats (6) bezüglich des ersten Substrats (6); und
Zusammenfügen der Substrate (6, 10) miteinander verklebt werden, **dadurch gekennzeichnet, dass** die Klebefolie (25) über eine sich drehende Andrückrolle (33) auf das Substrat (6) gedrückt wird, während das Substrat (6) und die Andrückrolle (33) relativ zueinander bewegt werden, wobei die Relativbewegung parallel zur Substratoberfläche verläuft.

2. Verfahren nach Anspruch 1, **dadurch gekennzeichnet, dass** die Klebefolie (25) während oder nach dem Aufbringen auf das erste Substrat (6) von einer Trägerfolie (26) abgezogen wird.

3. Verfahren nach Anspruch 1 oder 2, **dadurch gekennzeichnet, dass** von der Klebefolie (25) vor dem Aufbringen auf das erste Substrat (6) eine Schutzfolie (24) abgezogen wird.

4. Verfahren nach einem der vorhergehenden Ansprüche, **dadurch gekennzeichnet, dass** die Form und Größe der Klebefolie (25) den zu verklebenden Oberflächen der Substrate (6, 10) entspricht.

5. Verfahren nach Anspruch 4, **dadurch gekennzeichnet, dass** der Form und Größe der Substrate (6, 10) entsprechende Abschnitte (27) der Klebefolie (25) auf der Trägerfolie (26) ausgestanzt sind.

6. Verfahren nach einem der vorhergehenden Ansprüche, **dadurch gekennzeichnet, dass** die Klebefolie (25) zentriert auf der zu verklebenden Oberfläche des Substrats (6) aufgebracht wird.

7. Verfahren nach einem der vorhergehenden Ansprüche, **dadurch gekennzeichnet, dass** die Klebefolie (25) und das Substrat (6) vor dem Aufbringen zueinander ausgerichtet werden.

8. Verfahren nach einem der vorhergehenden Ansprüche, **dadurch gekennzeichnet, dass** der Anpreßdruck der Andrückrolle (33) gesteuert wird.

9. Verfahren nach einem der vorhergehenden Ansprüche, **dadurch gekennzeichnet, dass** die Klebefolie (25) vor dem Andrücken durch die Andrückrolle (33) unter einem vorgegebenen Winkel zur Oberfläche des Substrats (6) gehalten wird.

10. Verfahren nach einem der vorhergehenden Ansprüche, **dadurch gekennzeichnet, dass** das Substrat (6) linear an der Andrückrolle (33) vorbei bewegt wird.

11. Verfahren nach einem der vorhergehenden Ansprüche, **dadurch gekennzeichnet, dass** die Andrückrolle (33) synchron mit der Bewegung des Substrats (6) gedreht wird.

12. Verfahren nach einem der vorhergehenden Ansprüche, **dadurch gekennzeichnet, dass** die Substrate (6, 10) zu deren Ausrichtung auf einer Zentrier- und Halteeinrichtung (60) abgelegt werden.

13. Verfahren nach Anspruch 12, **dadurch gekennzeichnet, dass** die Zentrier- und Halteeinrichtung (60) die Substrate (6, 10) vor dem Zusammenfügen beabstandet hält.

14. Verfahren nach einem der vorhergehenden Ansprüche, **dadurch gekennzeichnet, dass** das Zusammenfügen der Substrate (6, 10) im Vakuum erfolgt.

15. Verfahren nach einem der vorhergehenden Ansprüche, **dadurch gekennzeichnet, dass** die Substrate (6, 10) zusammengedrückt werden.

16. Verfahren nach Anspruch 15, **dadurch gekennzeichnet, dass** der auf die Substrate (6, 10) ausgeübte Druck gesteuert wird.

17. Verfahren nach einem der vorhergehenden Ansprüche, **dadurch gekennzeichnet, dass** die Klebefolie (25) eine auf Druck ansprechende Klebefolie (25) ist.

18. Verfahren nach einem der vorhergehenden Ansprüche, **dadurch gekennzeichnet, dass** die Klebefolie (25) ausgehärtet wird.

19. Verfahren nach einem der vorhergehenden Ansprüche, **dadurch gekennzeichnet, dass** die Klebefolie aus einer Schicht aus Klebermaterial besteht.

20. Vorrichtung zum Herstellen eines Datenträgers mit wenigstens zwei mit einander verklebten Substraten (6, 10), mit
einer Laminierstation (7) zum Aufbringen einer zweiseitig klebenden Klebefolie (25) auf einem ersten Substrat; und einer Substrat-Verklebestation (11) zum Ausrichten und Zusammenfügen der Substrate (6, 10) **dadurch gekennzeichnet, dass** die Laminierstation (7) eine drehbare Andrückrolle (33) und eine Einrichtung (47) zum Bewegen des Substrats (6) und/oder der Andrückrolle relativ zueinander aufweist, wobei die Relativbewegung parallel zur Substratoberfläche verläuft.

21. Vorrichtung nach Anspruch 20, **dadurch gekennzeichnet, dass** die Form und Größe der Klebefolie (25) den zu verklebenden Oberflächen der Substrate (6, 10) entspricht.

22. Vorrichtung nach einem der Ansprüche 20 oder 21, **dadurch gekennzeichnet, dass** der Form und Größe der zu verklebenden Oberflächen der Substrate (6, 10) entsprechende Abschnitte (27) der Klebefolie (25) auf einer Trägerfolie (26) ausgestanzt sind.

23. Vorrichtung nach einem der Ansprüche 20 bis 22, **dadurch gekennzeichnet, dass** die Laminierstation (7) eine Ausrichteinheit zum Ausrichten der Klebefolie (25) mit der zu verklebenden Oberfläche des Substrats (6) aufweist.

24. Vorrichtung nach Anspruch 23, **dadurch gekennzeichnet, dass** die Einrichtung wenigstens eine Linearbewegungseinheit (47) für das Substrat (6) aufweist.

25. Vorrichtung nach einem der Ansprüche 20 bis 24, **gekennzeichnet durch** eine Zentrier- und Halteeinrichtung (60), die in einer ersten Einstellung die Substrate (6, 10) beabstandet hält und in einer zweiten Einstellung ein zentriertes Zusammenfügen der Substrate (6, 10) ermöglicht.

26. Vorrichtung nach einem der Ansprüche 20 bis 25, **dadurch gekennzeichnet, dass** die Substrat-Verklebestation (11) eine Vakuumkammer (66) aufweist.

27. Vorrichtung nach Anspruch 26, **dadurch gekennzeichnet, dass** die Vakuumkammer (66) eine Haube (65) und einen Boden (59) aufweist, der durch ein Substrat-Auflageelement (58) gebildet wird.

28. Vorrichtung nach einem der Ansprüche 20 bis 27, **dadurch gekennzeichnet, dass** die Substrat-Verklebestation (11) einen Druckstempel (67) aufweist.

29. Vorrichtung nach Anspruch 28, **dadurch gekennzeichnet, dass** der Druckstempel (67) ein Element zur Betätigung der Zentrier- und Halteeinrichtung (60) zwischen den ersten und zweiten Positionen aufweist.

30. Vorrichtung nach einem der Ansprüche 20 bis 29, **dadurch gekennzeichnet, dass** die Substrat-Verklebestation (11) eine Vorrichtung zum Anlegen von Druckluft an wenigstens eines der Substrate aufweist, um sie zusammenzudrücken.

31. Vorrichtung nach einem der Ansprüche 20 bis 30, **dadurch gekennzeichnet, dass** die Klebefolie eine Schicht eines Klebermaterials ist.

## Claims

1. Method of producing a data carrier in which at least two substrates are glued together by application of an adhesive film (25), which adheres at both sides, to a first substrate (6), alignment of a second substrate (6) with respect to the first substrate (6) and joining together the substrates (6, 10), **characterised in that** the adhesive film (25) is pressed onto the substrate (6) by way of a rotating pressing roller (33), whilst the substrate (6) and the pressing roller (33) are moved relative to one another, wherein the relative movement runs parallel to the substrate surface.

2. Method according to claim 1, **characterised in that** the adhesive film (25) is pulled off a carrier film (26) during or after application to the first substrate (6).

3. Method according to claim 1 or 2, **characterised in that** a protective film (24) is pulled off the adhesive film (25) before application to the first substrate (6).

4. Method according to one of the preceding claims, **characterised in that** the shape and size of the adhesive film (25) corresponds with the surfaces to be glued of the substrates (6, 10).

5. Method according to claim 4, **characterised in that** sections (27), which correspond with the shape and size of the substrates (6, 10), of the adhesive film (25) are punched out on the carrier film (26).

6. Method according to one of the preceding claims, **characterised in that** the adhesive film (25) is applied centred to the surface to be glued of the substrate (6).

7. Method according to one of the preceding claims, **characterised in that** the adhesive film (25) and the substrate (6) are aligned relative to one another before the application.

8. Method according to one of the preceding claims, **characterised in that** the pressing pressure of the pressing roller (33) is controlled.

9. Method according to one of the preceding claims, **characterised in that** the adhesive film (25) is held at a predetermined angle relative to the surface of the substrate (6) before pressing by the pressing roller (33).

10. Method according to one of the preceding claims, **characterised in that** the substrate (6) is moved linearly past the pressing roller (33).

11. Method according to one of the preceding claims, **characterised in that** the pressing roller (33) is rotated synchronously with the movement of the substrate (6).

12. Method according to one of the preceding claims, **characterised in that** the substrates (6, 10) are, for alignment thereof, deposited down on a centring and holding device (60).

13. Method according to claim 12, **characterised in that** the centring and holding device (60) keeps the substrates (6, 10) at a spacing before the joining together.

14. Method according to one of the preceding claims, **characterised in that** the joining together of the substrates (6, 10) is carried out in vacuum.

15. Method according to one of the preceding claims, **characterised in that** the substrates (6, 10) are pressed together.

16. Method according to claim 15, **characterised in that** the pressure exerted on the substrates (6, 10) is controlled.

17. Method according to one of the preceding claims, **characterised in that** the adhesive film (25) is an adhesive film (25) responding to pressure.

18. Method according to one of the preceding claims, **characterised in that** the adhesive film (25) is cured.

19. Method according to one of the preceding claims, **characterised in that** the adhesive film consists of a layer of cement material.

20. Device for producing a data carrier with at least two substrates (6, 10) glued together, comprising a laminating station (7) for application of an adhesive film (25), which adheres at both sides, to a first substrate, and a substrate gluing station (11) for aligning and joining together the substrates (6, 10), **characterised in that** the laminating station (7) comprises a rotatable pressing roller (33) and a device (47) for moving the substrate (6) and/or the pressing roller relative to one another, wherein the relative movement runs parallel to the substrate surface.

21. Device according to claim 20, **characterised in that** the shape and size of the adhesive film (25) corresponds with the surfaces to be glued of the substrates (6, 10).

22. Device according to one of claims 20 and 21, **characterised in that** the sections (27), which correspond with the shape and size of the surfaces to be glued of the substrates (6, 10), of the adhesive film (25) are punched out on a carrier film (26).

23. Device according to one of claims 20 to 22, **characterised in that** the laminating station (7) comprises an aligning unit for aligning the adhesive film (25) with the surface to be glued of the substrate (6).

24. Device according to claim 23, **characterised in that** the device comprises at least one linear movement unit (47) for the substrate (6).

25. Device according to one of claims 20 to 24, **characterised by** a centring and holding device (60) which in a first setting keeps the substrates (6, 10) at a spacing and in a second setting enables a centred joining together of the substrates (6, 10).

26. Device according to one of claims 20 to 25, **characterised in that** the substrate gluing station (11) comprises a vacuum chamber (66).

27. Device according to claim 26, **characterised in that** the vacuum chamber (66) comprises a hood (65) and a base (59), which is formed by a substrate support element (58).

28. Device according to one of claims 20 to 27, **characterised in that** the substrate gluing station (11) comprises a pressure ram (67).

29. Device according to claim 28, **characterised in that** the pressure ram (67) comprises an element for actuating the centring and holding device (60) between the first and second positions.

30. Device according to one of claims 20 to 29, **characterised in that** the substrate gluing station (11) comprises a device for applying compressed air to at least one of the substrates in order to press them together.

31. Device according to one of claims 20 to 30, **characterised in that** the adhesive film is a layer of cement material.

## Revendications

1. Procédé pour fabriquer un support de données avec lequel au moins deux substrats sont collés entre eux par
l'application d'un film adhésif (25) collant des deux côtés sur un premier substrat (6); l'alignement d'un deuxième substrat (6) par rapport au premier substrat (6); et
l'assemblage des substrats (6,10),
**caractérisé en ce que** le film adhésif (25) est appuyé sur le substrat (6) au moyen d'un galet presseur (33), alors que le substrat (6) et le galet presseur (33) sont déplacés l'un par rapport à l'autre, le déplacement relatif étant parallèle par rapport à la surface du substrat.

2. Procédé selon la revendication 1, **caractérisé en ce que** le film adhésif (25) est enlevé d'un film support (26) pendant ou après l'application sur le premier substrat (6).

3. Procédé selon la revendication 1 ou 2, **caractérisé en ce qu'**un film protecteur (24) est enlevé du film adhésif (25) avant l'application sur le premier substrat (6).

4. Procédé selon l'une quelconque des revendications précédentes, **caractérisé en ce que** la forme et la grandeur du film adhésif (25) correspondent aux surfaces à coller des substrats (6, 10).

5. Procédé selon la revendication 4, **caractérisé en ce que** des parties (27) du film adhésif (25), correspondant à la forme et à la grandeur du substrat (6, 10) sont découpées sur le film support (26).

6. Procédé selon l'une quelconque des revendications précédentes, **caractérisé en ce que** le film adhésif (25) est appliqué de façon centrée sur la surface à coller du substrat (6).

7. Procédé selon l'une quelconque des revendications précédentes, **caractérisé en ce que** le film adhésif (25) et le substrat (6) sont orientés l'un vers l'autre avant l'application.

8. Procédé selon l'une quelconque des revendications précédentes, **caractérisé en ce que** la pression d'appui du galet presseur (33) est contrôlée.

9. Procédé selon l'une quelconque des revendications précédentes, **caractérisé en ce que** le film adhésif (25) est maintenu avant l'application de la pression par le galet presseur (33) en formant un angle prédéfini par rapport à la surface du substrat (6).

10. Procédé selon l'une quelconque des revendications précédentes, **caractérisé en ce que** le substrat (6) est déplacé de façon linéaire an passant devant le galet presseur (33).

11. Procédé selon l'une quelconque des revendications précédentes, **caractérisé en ce que** le galet presseur (33) est tourné de façon synchrone avec le déplacement du substrat (6).

12. Procédé selon l'une quelconque des revendications précédentes, **caractérisé en ce que** les substrats (6, 10) sont déposés sur un système de centrage et de retenue (60) pour leur alignement.

13. Procédé selon la revendication 124, **caractérisé en ce que** le système de centrage et de retenue (60) maintient les substrats (6, 10) espacés à un certain écart les uns des autres avant l'assemblage.

14. Procédé selon l'une quelconque des revendications précédentes, **caractérisé en ce que** l'assemblage des substrats (6, 10) s'effectue dans le vide.

15. Procédé selon l'une quelconque des revendications précédentes, **caractérisé en ce que** les substrats (6, 10) sont comprimés.

16. Procédé selon la revendication 15, **caractérisé en ce que** la pression exercée sur les substrats (6, 10) est contrôlée.

17. Procédé selon l'une quelconque des revendications précédentes, **caractérisé en ce que** le film adhésif (25) est un film adhésif (25) réagissant à la pression.

18. Procédé selon l'une quelconque des revendications précédentes, **caractérisé en ce que** le film adhésif est durci.

19. Procédé selon l'une quelconque des revendications précédentes, **caractérisé en ce que** le film adhésif est à base d'une couche faite de matériau adhésif.

20. Dispositif pour fabriquer un support de données avec au moins deux substrats (6, 10) collés ensemble,
avec une station de laminage (7) pour l'application d'un film adhésif (25) collant des deux côtés sur un premier substrat, et une station de collage de substrat (11) pour l'alignement et l'assemblage des substrats (6, 10), **caractérisé en ce que** la station de laminage (7) présente un galet presseur (33) rotatif et un dispositif (47) pour le déplacement du substrat (6) et/ou du galet presseur l'un par rapport à l'autre, le déplacement relatif s'effectuant parallèlement à la surface du substrat.

21. Dispositif selon la revendication 20, **caractérisé en ce que** la forme et la grandeur du film adhésif (25) correspondent aux surfaces à coller du substrat (6,10).

22. Dispositif selon l'une quelconque des revendications 20 ou 21, **caractérisé en ce que** des parties (27) du film adhésif (25), correspondant à la forme et à la grandeur des surfaces à coller, sont découpées sur un film support (26).

23. Dispositif selon l'une quelconque des revendications 20 à 22, **caractérisé en ce que** la station de laminage (7) présente une unité d'alignement pour l'alignement du film adhésif (25) avec la surface à coller du substrat (6).

24. Dispositif selon la revendication 23, **caractérisé en ce que** le dispositif présente au moins une unité de déplacement linéaire (47) pour le substrat (6).

25. Dispositif selon l'une quelconque des revendications 20 à 24, **caractérisé par** un système de centrage et de retenue (60), qui maintient les substrats (6, 10) espacés les uns des autres dans un premier réglage et permet un assemblage centré des substrats (6, 10) dans un deuxième réglage.

26. Dispositif selon l'une quelconque des revendications 20 à 25, **caractérisé en ce que** la station de collage de substrat (11) présente une chambre à vide (66).

27. Dispositif selon la revendication 26, **caractérisé en ce que** la chambre à vide (66) présente un chapeau (65) et un fond (59) qui est formé par un élément de support de substrat (58).

28. Dispositif selon l'une quelconque des revendications 20 à, 27, **caractérisé en ce que** la station de collage de substrat (11) présente un poinçon (67).

29. Dispositif selon la revendication 28, **caractérisé en ce que** le poinçon (67) présente un élément pour l'actionnement du système de centrage et de retenue (60) entre les premières et deuxièmes positions.

30. Dispositif selon l'une quelconque des revendications 20 à 29, **caractérisé en ce que** la station de collage de substrat (11) présente un dispositif pour l'application d'air comprimé sur au moins l'un des substrats pour les comprimer.

31. Dispositif selon l'une quelconque des revendications 20 à 30, **caractérisé en ce que** le film adhésif est une couche d'un matériau adhésif.
